# EUROPEAN PATENT APPLICATION

(11) **EP 3 742 285 A1**
(43) Date of publication of application: **25.11.2020**
(21) Application number: 19175342.5
(22) Date of filing: 20.05.2019
(51) Int. Cl.: G06F 8/65

(54) **SOFTWARE UPDATE METHOD AND HEAD MOUNTED DISPLAY SYSTEM USING THE SAME**

(71) Applicant: XRSpace CO., LTD., Taoyuan City 330 (TW)
(72) Inventor: Huang, Chi-Yang, 711 Tainan City (TW)
(74) Representative: Straus, Alexander

(57) **Abstract**

The present disclosure discloses a software updating method for a head mounted display system (100). A memory device (104) of the head mounted display system (100) stores a program code including a platform software (130) and an application software (140). The software updating method includes two steps. At first, receive an update package (202) from a remote server (200) via an update channel (300) between the remote server (200) and the head mounted display system (100). Then, update the head mounted display system (100) using the update package (202). In the updating step, all of non-dependency software components (134) of the platform software (130) and all of non-dependency software components (144) of the application software (140) are not updated.

## Description

### Field of the Invention

The present disclosure relates to a software update method and a head mounted display system using software update method.

### Background of the Invention

People who use modern general-purpose computers usually see two layers of software performing a variety of tasks: platform software and application software. The platform software includes the firmware, device drivers, an operating system, and typically a graphical user interface. Platform software often comes bundled with the computer. Application software, for example, office suites and video games, is often purchased separately from computer hardware. Sometimes applications are bundled with the computer, but that does not change the fact that they run as independent applications. Applications are usually independent programs from the operating system, though they are often tailored for specific platforms.

User software can be considered as a part of application software. User software is usually used to meet users' specific needs. For example, email filters are a kind of user software. User software includes spreadsheet templates and word processor templates.

Firmware Over-The-Air (or FOTA) is a way for mobile device manufacturers to wirelessly update the firmware of mobile devices. The firmware is executed in the background without the user having to enter anything, and it is also the location where the mobile device hardware is normally executed. The process of downloading these updates wirelessly usually takes 3 to 10 minutes, depending on the connection speed and update size.

Store update, for example, App Store update in an iOS system or Google Play update in an Android system, is a way for mobile device manufacturers and application developers to wirelessly update application software of a mobile device.

### Summary of the Invention

The present invention aims at providing a software update method different from the FOTA and the store update, and a head mounted display system using the software update method.

This is achieved by a software update method and a head mounted display system using the software update method according to the independent claims here below. The dependent claims pertain to corresponding further developments and improvements.

As will be seen more clearly from the detailed description following below, the claimed software updating method for a head mounted display system is disclosed. A memory device of the head mounted display system stores a program code including platform software and application software. The software updating method comprises two steps. At first, receive an update package from a remote server via an update channel between the remote server and the head mounted display system. Then, update the head mounted display system using the update package. In the updating step, all of non-dependency software components of the platform software and all of non-dependency software components of the application software are not updated.

As will be seen more clearly from the detailed description following below, another claimed head mounted display system is capable of being updated by a remote server via an update channel between the remote server and the head mounted display system. The head mounted display system comprises a processing device and a memory device coupled to the processing device. The memory device stores a program code. The program code includes platform software and application software. When the head mounted display system is updated, all of non-dependency software components of the platform software and all of non-dependency software components of the application software are not updated.

In summary, the present disclosure discloses the software update method and the head mounted display system using the software update method, the software update method can update at least a part of dependency software components of the platform software and/or at least a part of dependency software components of the application software.

### Brief Description of the Drawings

In the following, the invention is further illustrated by way of example, taking reference to the accompanying drawings. Thereof
FIG.1 illustrates a head mounted display system, a remote server and an update channel according to an embodiment of the present disclosure;
FIG.2 illustrates a flowchart of a method for operating the head mounted display system depicted in FIG.1 according to an embodiment of the present disclosure; and
FIG.3 illustrates a remote server triggering software update procedure for multiple head mounted display devices according to an embodiment of the present disclosure.

### Detailed Description

The present disclosure relates to a software update method for updating software components of a head mounted display and the head mounted display system updated by the software update method via an update channel between a remote server and the head mounted display.

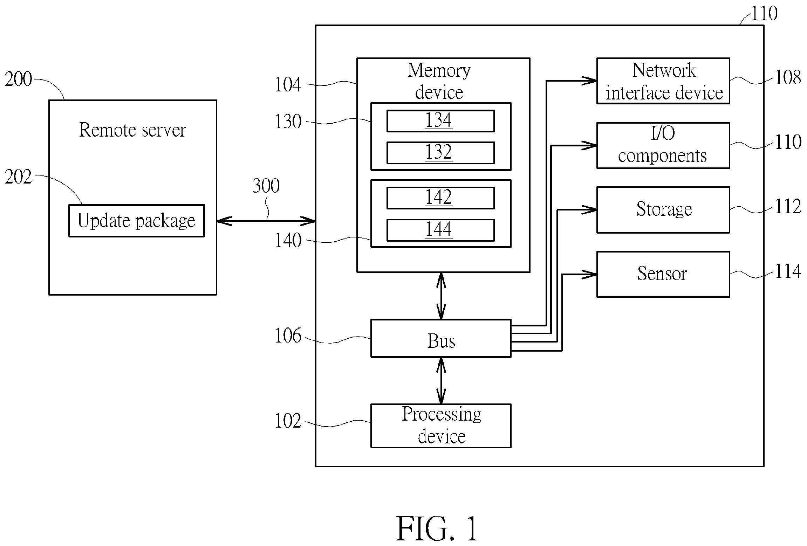

FIG.1 illustrates a head mounted display system 100, a remote server 200 and an update channel 300 according to an embodiment of the present disclosure.

In this embodiment, the head mounted display system 100 includes a processing device 102, a memory device 104, a bus 106, a network interface device 108, input/output (I/O) components 110, a storage 112 and a sensor 114. The remote server 200 may be communicably connected to the network interface device 108 of the head mounted display system 100 via the update channel 300.

In some embodiments, the head mounted display system 100 may include one or more wearable device (e.g., a ring, a shoe, an armband, a sleeve, a jacket, glasses, a glove, a watch, a wristband, a bracelet, an article of clothing, a hat, a headband, and/or jewelry).

In some embodiments, the remote server 200 may include a cloud server, an edge server, a local server or the like.

In some embodiments, the components (e.g., the processing device 102, the network interface device 108, the sensor 114, etc.) of the head mounted display system 100 may be integrated into a single housing. In other embodiments, the components may be distributed (e.g., among multiple housings or location) and in electrical communication with one another. The head mounted display system 100 may or may not comprise all of the components depicted in FIG.1. For example, in some embodiments, the head mounted display system 100 may comprise the processing device 102, the memory device 104, the bus 106 and the network interface device 108.

The processing device 102 may be interfaced with other hardware via the bus 106. The memory device 104 can comprise any suitable tangible (and non-transitory) computer-readable medium such as RAM, ROM, EEPROM, or the like, and can embody software components that configure operation of the head mounted display system 100.

The network interface device 108 can represent one or more of any components that facilitate a network connection or otherwise facilitate communication between electronic devices. Examples include, but are not limited to, wired interfaces such as Ethernet, USB, IEEE 1394, and/or wireless interfaces such as IEEE 802.11, Bluetooth, near-field communication (NFC) interfaces, RFID interfaces, or radio interfaces for accessing cellular telephone networks (e.g., transceiver/antenna for accessing a CDMA, GSM, UMTS, or other mobile communications network).

I/O components 110 may be used to facilitate connection to devices such as one or more sensor 114, displays, touch sensitive surfaces, keyboards, mice, speakers, microphones, buttons, and/or other hardware used to input data or output data. The storage 112 represents nonvolatile storage such as read-only memory, flash memory, ferroelectric RAM (F-RAM), magnetic, optical, or other storage media included in the head mounted display system 100 or coupled to the processing device 102.

The one or more sensor 114 may include one or more cameras for capturing user and/or environment image, upper body sensors, lower body sensors or a combination of thereof. For example, the number of the upper body sensor may be two and the two upper body sensors can be worn at two hands of the user. For example, the number of the lower body sensors may be two and the two lower body sensors can be worn at two foots of the user. The one or more sensor 114 can include an interaction sensor. The interaction sensor may comprise an accelerometer, gyroscope, camera, radio frequency identification (RFID) tag or reader, indoor proximity system, NFC communication device, global positioning system (GPS) device, magnetometer, ultrasonic transducer, switch, button, optical sensor, light sensor, microphone, wireless interface (e.g., an IEEE 802.11 or Bluetooth interface), infrared sensor, depth sensor, and/or range sensor.

The software of the head mounted display system 100 includes platform software 130 and application software 140. Parts of software components of the platform software 130 and the application software 140 can be classified as dependency software components 132, 142. Another Parts of software components of the platform software 130 and the application software 140 can be classified as non-dependency software components 134, 144. When the head mounted display system 100 is updated, all of non-dependency software components 134 of the platform software 130 and all of non-dependency software components 144 of the application software 140 are not updated. The software update method can only update at least a part of dependency software components 132 of the platform software 130 and/or at least a part of dependency software components 142 of the application software 140. Therefore, it is possible to shorten update time and/or reduce transmit amount in a software update process.

In some embodiment, the dependency software components 142 of the application software 140 may include interact with interface of hardware and shared library. The non-dependency software components 144 of the application software 140 may include user interface and application logic. The dependency software components 132 of the platform software 130 may include interface layer and shared modules for application. The non-dependency software components 134 of the platform software 130 may include hardware driver layer and framework layer.

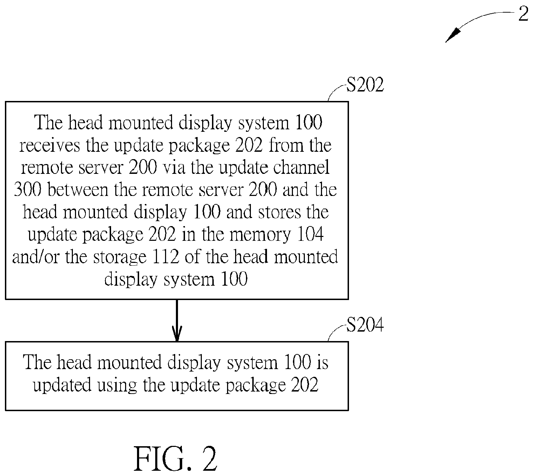

FIG.2 illustrates a flowchart of a method 2 for operating the head mounted display system 100 depicted in FIG.1 according to an embodiment of the present disclosure. The method 2 may comprise the following steps:
Step S202: The head mounted display system 100 receives the update package 202 from the remote server 200 via the update channel 300 between the remote server 200 and the head mounted display 100 and stores the update package 202 in the memory device 104 and/or the storage 112 of the head mounted display system 100.
Step S204: The head mounted display system 100 is updated using the update package 202.

Before step S202, for example, when a service provider has new software functionalities, new software components and/or bug fixes, the service provider may trigger the remote server 200 to generate an update package 202 and release the update package 202 to a head mounted display system 100 via the update channel 300.

In step S202, the head mounted display system 100 receives the update package 202 from the remote server 200 via the update channel 300 between the remote server 200 and the head mounted display system 100. The update package 202 may comprise software components which are related to the desired areas of the head mounted display system 100. The desired areas mean these are the target areas of the head mounted display system 100 prepared to be updated.

In step S204, the head mounted display system 100 is updated using the update package 202. In this step, all of non-dependency software components 134 of the platform software 130 and all of non-dependency software components 144 of the application software 140 are not updated.

In some embodiments, after step S202, the update package 302 may be saved in the memory device 104 and/or the storage 112 of the head mounted display system 100. Then, before step S204, the head mounted display system 100 may start the security and identity checks to make sure the update package 202 is released by the remote server 200 and has not tampered or intercepted by any other user. For example, the head mounted display system 100 may use public key cryptography or RSA cryptosystem to perform the security and identity checks.

In some embodiments, the update package 202 may comprise a version number. The version number may be used to identify the service and make sure the service is backward compatible. The cloud server 100 may reference the version number of the head mounted display system 100 to know the version number of the head mounted display system 100 and provide the related version number of services.

In some embodiments, the head mounted display system 100 may only enable the desired areas prepared to be updated in an update procedure for making sure the update package 302 is successfully updating the correct areas of the head mounted display system 100. If the update procedure is not complete, the head mounted display system 100 may disable the desired areas prepared to be updated in the update procedure. In this case, the head mounted display system 100 may be updated by using a previous version of the update package 302.

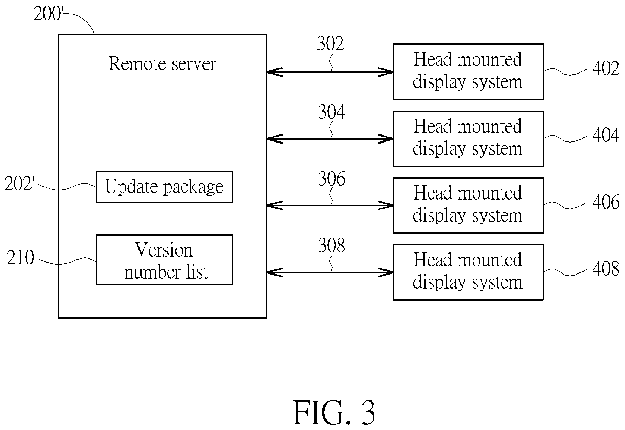

FIG.3 illustrates a remote server triggering software update to multiple head mounted display systems according to an embodiment of the present disclosure.

As shown as FIG.3, a remote server 200' is capable of updating different systems, that is, the head mounted display systems 402, 404, 406 and 408, via the update channel 302, 304, 306 and 308.

The remote server 200' may comprise a version number list 210. The version number list 210 may record the system IDs and its software version numbers of the head mounted display systems 402, 404, 406 and 408. In this embodiment, the remote server 200' may target the head mounted display systems 402, 404 to be firstly updated. That is, The remote server 200' can firstly update a subset of the head mounted display systems 402, 404, 406 and 408 by using a update package 202'. After that, the remote server 200' may target the head mounted display systems 406, 408 to be updated by using the update package 202'.

In summary, the present disclosure discloses a software update method and a head mounted display system using the software update method to be updated. When the head mounted display system is updated, all of non-dependency software components of the platform software and all of non-dependency software components of the application software are not updated. Therefore, it is possible to shorten update time and/or reduce transmit amount in a software update process.

## Claims

1. A head mounted display system (100) capable of being updated by a remote server (200) via an update channel (300) between the remote server (200) and the head mounted display system (100), **characterised in that** the head mounted display system (100) comprises:
a processing device (102); and
a memory device (104) coupled to the processing device (102) for storing a program code, the program code including platform software (130) and application software (140);
wherein when the head mounted display system (100) is updated, all of non-dependency software components (134) of the platform software (130) and all of non-dependency software components (144) of the application software (140) are not updated.

2. The head mounted display system (100) of claim 1, **characterised in that** when the head mounted display system (100) is updated, all of dependency software components (132) of the platform software (130) and all of dependency software components (142) of the application software (140) are updated.

3. The head mounted display system (100) of claim 1, **characterised in that** when the head mounted display system (100) is updated, only a part of dependency software components (132) of the platform software (130) is updated.

4. The head mounted display system (100) of claim 3, **characterised in that** when the head mounted display system (100) is updated, only a part of dependency software components (142) of the application software (140) is updated.

5. The head mounted display system (100) of claim 1, **characterised in that** when the head mounted display system (100) is updated, only a part of dependency software components (142) of the application software (140) is updated.

6. A software updating method for a head mounted display system (100), **characterised in that** a memory device (104) of the head mounted display system (100) stores a program code including platform software (130) and application software (140), and the software updating method comprises:
receiving an update package (202) from a remote server (200) via an update channel (300) between the remote server (200) and the head mounted display (100); and
updating the head mounted display system (100) using the update package (202);
wherein, in the updating step, all of non-dependency software components (134) of the platform software (130) and all of non-dependency software components (144) of the application software (140) are not updated.

7. The software updating method of claim 6, **characterised in that**, in the updating step, all of dependency software components (132) of the platform software (130) and all of dependency software components (142) of the application software (140) are updated.

8. The software updating method of claim 6, **characterised in that**, in the updating step, only a part of dependency software components (132) of the platform software (130) is updated.

9. The software updating method of claim 8, **characterised in that**, in the updating step, only a part of dependency software components (142) of the application software (140) is updated.

10. The software updating method of claim 6, **characterised in that**, in the updating step, only a part of dependency software components (142) of the application software (140) is updated.
